# EUROPEAN PATENT APPLICATION

(11) **EP 1 278 156 A2**
(43) Date of publication of application: **22.01.2003**
(21) Application number: 02015445.6
(22) Date of filing: 11.07.2002
(51) Int. Cl.: G06N 5/02

(54) **Knowledge data representing methods, system and program**

(30) Priority: 19.07.2001 JP 2001219818
(71) Applicant: Toyota Caelum Incorporated, Nagoya-shi, Aichi-ken, 460-0008 (JP)
(72) Inventor: Kawai, Motomasa, Nagoya-shi, Aichi-ken, 460-0008 (JP); Ariyoshi, Hideho, Nagoya-shi, Aichi-ken, 460-0008 (JP); Ishikawa, Hitoshi, Nagoya-shi, Aichi-ken, 460-0008 (JP); Ogawa, Masanori, Nagoya-shi, Aichi-ken, 460-0008 (JP)

(57) **Abstract**

A method of representing knowledge data (16a) in a computer (12) which is used for accumulating worker knowledge, an information processing system and a program are disclosed, wherein the knowledge of a worker is represented as at least one of an input information given to the computer (12) and processing information executed by the computer (12). The information obtained is represented as output information and respective pieces of information are readably accumulated in association with one another by the computer (12). With the method, the knowledge data (16a) is made easy for the worker to understand, and it is also made easy to prepare, understand and revise the knowledge data (16a).

## Description

### BACKGROUND OF THE INVENTION

### 1. Field of the Invention:

The present invention relates to knowledge data representing methods, a data processing system and a program.

### 2. Description of Related Art:

Expert knowledge of workers and data acquired through practical works have been required for processing in various fields, including technical fields such as design process, manufacturing process, trouble shooting and the like.

For example, in forming a workpiece by a squeeze forming technology, a worker determines a thickness and material of a plate blank based on a shape of a product to be made, taking into account those parameters (so-called "know-how") which he acquired through practical works over a time period. Further, with die mold design for resinous products, it has been a practice that the thickness of a product, the positions and thickness required for ribs, the thickness of a used plate blank, and the shape of a squeeze punch are determined not only based upon the size of the product and the material of the used plate blank, but also on a dependence upon those parameters (so-called "know-how") which the worker in charge has acquired through practical works.

Because a new worker has to learn the process and know-how while working under the direction of a skilled worker, it may take a long period of time until the new worker acquires the same knowledge. For the purpose of overcoming these drawbacks, it has been proposed to accumulate in a computer the know-how of a skilled worker in the form of knowledge data and to automate the design process incorporating this know-how by the use of the computer.

However, in order to accumulate the knowledge data in the computer, a program for the knowledge data had to be prepared in a "knowledge-descriptive language" which the computer was able to handle. For this reason, the preparation of such knowledge data was difficult even for the experienced worker, and the accumulation of such knowledge data could not be realized easily.

Furthermore, the aforementioned language had to be learned by those who make revisions and additions to the knowledge data which had been previously prepared. Finally, it was necessary to understand what the currently existing knowledge data represented, which made such revisions and additions more difficult.

### SUMMARY OF THE INVENTION

The present invention has been made in light of the foregoing circumstances, and an object of the present invention is to provide a method of representing knowledge data, an information processing system and a program which are easy to prepare, understand and revise.

According to the present invention, methods of representing knowledge data are provided which are used for accumulating in a computer the expert knowledge of a worker in the form of knowledge data. In the methods of representing knowledge data, the knowledge of the worker is represented as at least one of input information given to the computer and processing information executed by the computer, then as output information obtained from this process. The respective pieces of information are readably accumulated by the computer in association with one another.

According to the representing methods, the knowledge data is described following the basic flow of computer processing, such as from "input information," to "processing information" and to "output information." Since the description is easy for the workers (i.e., designers and technicians) to understand, they can easily prepare, maintain and change the knowledge data. Accordingly, it becomes possible to represent know-how easily.

Further, it is preferable that the knowledge data is represented using a decision table which includes the procedure of works performed by the worker and the aforementioned respective pieces of information.

According to the representing method, the knowledge data is described by specifying the relation between "input information" and "output information." Describing in this manner is effective in representing the information which the worker acquired through experiences.

In addition, it is preferable that the knowledge data is stored associated with information that indicates the content of the knowledge data.

According to the representing method, it becomes easier to understand the knowledge data, so that the maintenance and change of the knowledge data can be done easily.

Furthermore, it is preferable that the output information is determined to meet the case in which the input information is applied.

According to the representing method, the knowledge data is described by specifying the relation between "input information" and "output information." Describing in this way is effective in expressing the information which the worker acquired through experiences.

Furthermore, it is preferable that in the processing information, there is described one of an arithmetic equation, a name indicative of a predetermined function, a name indicative of knowledge data and a macro name.

According to the representing method, by making it possible that an arithmetic equation, an existing function, ready-made knowledge data and a macro program are described in knowledge data, the resources prepared previously can be utilized effectively.

Further, it is preferable that information for controlling the processing flow is described in at least one of the input information, processing information and output information.

According to the representing method, it can be realized to prepare a complicated procedure with a combination of simple procedures, i.e., to execute processings of a high level.

Further, an information processing system is provided having knowledge data which represents the expert knowledge of a worker as at least one of input information given to a computer and processing information executed by the computer, and then as output information obtained by the process. The knowledge data is readably accumulated by the computer with the respective pieces of information being associated with one another, and the system also has a processing engine that causes the computer analyze and execute the knowledge data.

According to the information processing system, the knowledge data is described with "input information," "processing information" and "output information" which forms the basic flow in computer processing. Since the description in this manner is easy for the workers, for example designers and technicians, to understand, they can prepare, maintain and change the knowledge data easily.

Further, it is preferable that a function name specifying a given function is described in the processing information of the knowledge data and that if the description is such a function name, the processing engine analyzes a description of the processing information so as to call from an outside source a processing function providing the given function.

According to the information processing system, by utilizing processing functions which provide the existing functions, the processing engine can be simplified in configuration, can be speeded up in operation and can be developed in a shorter period of time.

Further, the processing functions include a function for making the computer process shape data and another function for making the computer execute a predetermined operational processing.

According to the information processing system, a processing such as, for example, a required operational processing and the recognition of shape data can be easily utilized.

Further, it is preferable that an information processing system according to the present invention is provided with knowledge data which represents the knowledge of a worker as at least one of input information given to a computer and processing information executed by the computer and as output information obtained by the process and which is readably accumulated by the computer with the respective pieces of information being associated with one another; a processing engine that causes the computer to analyze and execute the knowledge data; and a function program which includes a processing called by the processing engine for being executed by the computer to deliver the processing result to the processing engine.

According to the information processing system, by separating the processing engine and the function program from each other, the developments for the engine and the program become easy, and the maintenance ability for the same can also be improved.

Further, it is preferable that the function program includes functions relating to the shape data and includes a computer-aided-design program for aiding the generation and revision of the shape data and a function group which includes functions described in the knowledge data but those included in the computer-aided-design program.

According to the information processing system, by utilizing the existing computer-aided-design programs, the function groups to be prepared newly can be reduced in number, so that the knowledge data can be accumulated and utilized easily.

Furthermore, it is preferable that a branch command is described in the knowledge data and that the processing engine operates to analyze the branch command and then, to analyze the procedure which a label written together with the command is affixed to.

According to the information processing system, a complicated procedure can be prepared by a combination of simple procedures, whereby processings of a high level can be executed.

Further, according to the present invention, there is provided as the processing engine a program which is capable of making a computer execute a step of receiving a discrimination element indicative of knowledge data, a step of searching a knowledge data table by reference to the received discrimination element, a step of analyzing and executing data on the searched table on a line-by-line basis one after another from the top, and a step of delivering a result on the function to the function program if the description of processing information begins with "function:" and then receiving the processing result.

Additionally, there is provided a program for making a computer execute knowledge data which represents the knowledge of a worker as at least one of input information given to the computer and processing information executed by the computer and as output information obtained thereby and which is accumulated readably by the computer with the respective pieces of information being associated with one another, said program comprising a step of receiving a discrimination element indicative of the knowledge data, a step of searching a table for the knowledge data by reference to the received discrimination element, a step of analyzing and executing data on the searched table on a line-by-line basis one after another from the top, a step of handing over information of the function to the function program and if the description of processing information begins with "function:" and of receiving the processing result.

### BRIEF DESCRIPTION OF THE DRAWINGS

The foregoing and other objects, features, advantages, technical and industrial significance of this invention will be better understood by reading the following detailed description of preferred embodiments of the invention, when considered in connection with the accompanying drawings, in which:
Fig. 1 is a block diagram of an exemplary design system as one embodiment according to the present invention;
Fig. 2 is a block diagram of an exemplary knowledge-base system in an embodiment according to the present invention;
Fig. 3 is a block diagram of an exemplary computer-aided-design (CAD) system in an embodiment according to the present invention;
Fig. 4 is an explanatory view showing an exemplary structure of knowledge data in an embodiment according to the present invention;
Fig. 5 is an explanatory view showing one example of the content of the knowledge data;
Fig. 6 is an explanatory view showing another example of the content of the knowledge data;
Fig. 7 is an explanatory view showing yet another example of the content of the knowledge data;
Fig. 8 is an explanatory view showing yet another example of the content of the knowledge data;
Fig. 9 is an explanatory view showing yet another example of the content of the knowledge data;
Fig. 10 is an explanatory view showing yet another example of the content of the knowledge data;
Fig. 11 is an explanatory view showing yet another example of the content of the knowledge data;
Fig. 12 is an explanatory view showing an example of preparing shape data in an embodiment of the present invention;
Fig. 13 is an explanatory view of exemplary knowledge data for the explanatory view shown in Fig. 12;
Figs. 14a and 14b are explanatory views of exemplary electric discharge machining in an embodiment according to the present invention;
Fig. 15 is an explanatory view of exemplary knowledge data for the explanatory views shown in Fig. 14a and 14b;
Fig. 16 is a screen view illustrating an exemplary input in an embodiment according to the present invention;
Fig. 17 is a second screen view illustrating another exemplary input in an embodiment according to the present invention;
Fig. 18 is a third screen view illustrating another exemplary input in an embodiment according to the present invention;
Fig. 19 is a fourth screen view illustrating another exemplary input in an embodiment according to the present invention;
Fig. 20 is a fifth screen view illustrating another exemplary input in the embodiment according to the present invention; and
Fig. 21 is an explanatory view showing an administration of knowledge data in an embodiment according to the present invention.

### DESCRIPTION OF THE PREFERRED EMBODIMENTS

In the following description and the accompanying drawings, the present invention will be described in more detail with reference to exemplary, preferred embodiments.

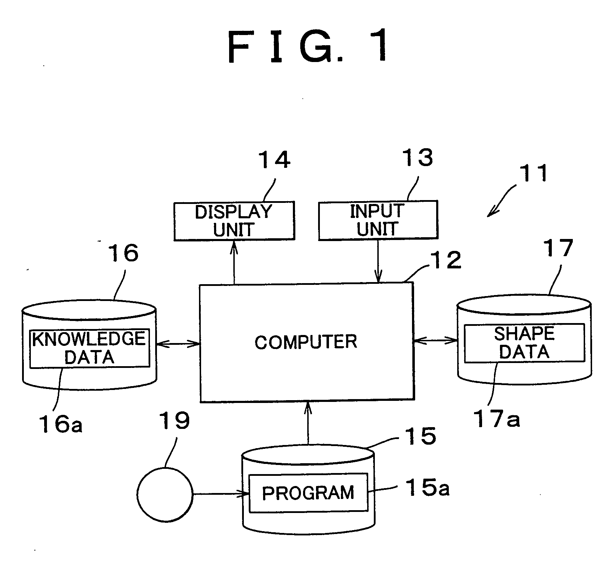

Fig. 1 is a block diagram of a design system 11 that can operate as an information processing system. This system 11 is composed of a computer 12 connected to an input unit 13, a display unit 14 and memory units 15-17.

The input unit 13 includes a keyboard, a mouse, a tablet (all not shown) and the like and is used for inputting requests, instructions, parameters and the like given from users. The display unit 14 includes a VDT, a monitor and a printer and is used for displaying data display images for design data, knowledge data and the like and for displaying input images for various parameters.

The memory units 15-17 conventionally include a magnetic disc drive, an optical disc drive and an optical-magnetic disc drive, and these units 15-17 are selectively used depending upon the kind, status and the like of data stored in the memory units 15-17. Fig. 1 shows the memory units 15-17 as those separated in view of their functions. However, they may be constructed as being not separated or there may be taken such a form that data and the like are separated for storage in several memory units.

The first memory unit 15 stores program data 15a. The second memory unit 16 stores knowledge data 16a. The third memory unit 17 stores shape data 17a.

The program data 15a includes program data for utilizing and administrating the knowledge data. The knowledge data 16a is of the property that a variety of human working procedures are digitalized, and is represented by a table in which each working procedure is associated with various pieces of information used in a corresponding processing. The shape data 17a includes data (CAD data) and manufacturing information which have been prepared by a CAD.

The program data 15a is furnished in the form of a storage media 19. As the storage media, there are used recording mediums such as, for example, memory cards, floppy discs, optical discs (CD-ROM, DVD-ROM, •••), optical-magnetic discs (MO, MD, •••), etc. that are readable by suitable computers. The computer 12 drives a drive unit (not shown) to load program data 15a recorded on the recording medium 19 on the memory unit 15 and execute the program data 15a. A modification may be made wherein the programmed data 15a recorded on the recording medium 19 is directly executed by the computer 12.

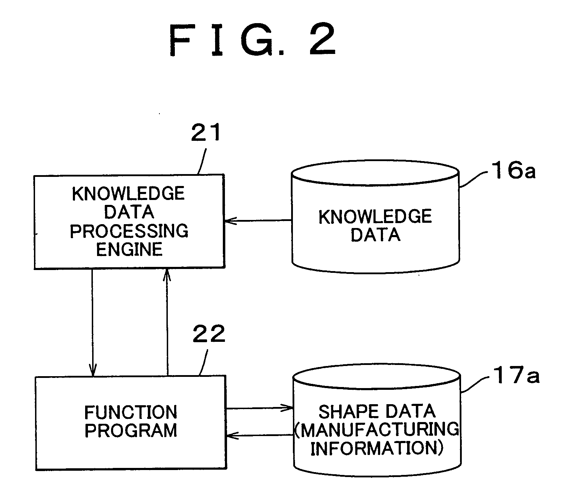

Fig. 2 is an block diagram illustrative of the construction of the program data 15a executed by the computer 12 and the relation between respective sets data 16a and 17a. The program data 15a includes a knowledge data processing engine 21, a function program 22 and a knowledge data administration program (not shown).

The knowledge data processing engine 21 includes a program for interpreting the knowledge data 16a read out so that the computer 12 can execute the preparation of shape data, the recognition of macros, and the recognition of input information through the function program 22. The function program 22 includes a plurality of programs (function programs) for making the computer 12 execute shape generation processings such as the preparation of shape data, shape recognition, etc. and operation processings such as the four rules of arithmetic operation, the area calculation, etc. The knowledge data administration program is a program for making the computer 12 execute processings for preparation and renewal (addition and deletion) of knowledge data 16a.

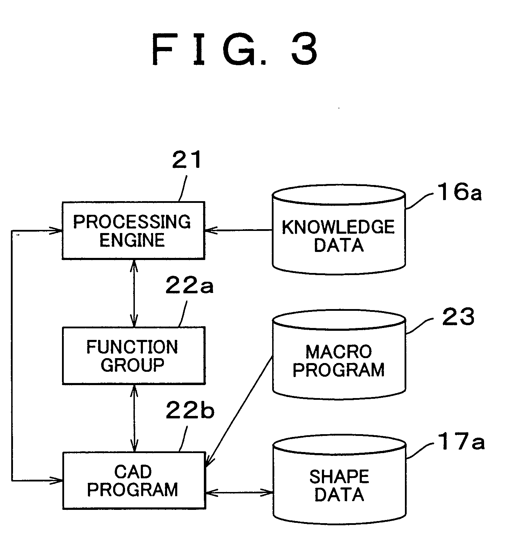

The function program 22 can be substituted in part by the CAD program existing already. More specifically, as shown in Fig. 3, the function program 22 includes a function group 22a and a CAD program 22b. The function group 22a includes plural programs for making the computer 12 execute operation processings such as the four rules of arithmetic, the area calculation, etc. The CAD program includes plural programs for making the computer 12 execute the shape generation processings such as preparation of shape data, shape recognition, etc.

The CAD program 22b is provided for interactively carrying out the generation and revision of shape data (CAD data). Under the program, the worker (i.e., designer and/or technician) manipulates the input unit 13 shown in Fig. 1 and performs the generation and revision of shape data in accordance the menu displayed on the display unit 14. At that time, the worker utilizes a macro program which is of the ready-made or which he made by himself, in performing the generation and revision of shape data. The macro program 23 includes single or plural subprograms, each of which includes data describing the procedure of how to execute the processing. The macro program 23 is used by the knowledge data processing engine 21.

The worker stores a macro program 23 which he prepared during, e.g. the preparation of shape data, at the location set by the CAD program 22b, namely, in the first memory unit 15 shown in Fig. 1. Then, the worker describes into the knowledge data 16a a discrimination element (macro name) indicative of the macro program 23. The knowledge data processing engine 21 (in other words, the computer 12 for executing the program) analyzes the knowledge data 16a read therein and reads out a data function program including the discrimination element for execution of a function indicated by the discrimination element (that is, calls the task to execute the function program 22). The computer 12 executes a function program corresponding to the discrimination element included in the data if the function program exists in the function group 22a, but reads out the CAD program 22b if it does not exist in the function group 22a. Thereafter, the computer 12 reads out and executes the macro program 23 in the execution of the CAD program 22b.

In short, the knowledge data 16a is described as the processing wherein the computer 12 executes a function program (subprogram) included in any of the function group 22a, the CAD program 22b and the macro program 23.

As mentioned above, by separating the knowledge data processing engine 21 and the function program 22 from each other, they become easy to develop and are improved in maintenance. Further, by utilizing the CAD program 22b, the amount to prepare the function group 22a can be reduced, whereby the time period for the development thereof can be shortened. In addition, by making the macro program 23 be describable in the knowledge data 16a, the resources already having been made can be utilized effectively.

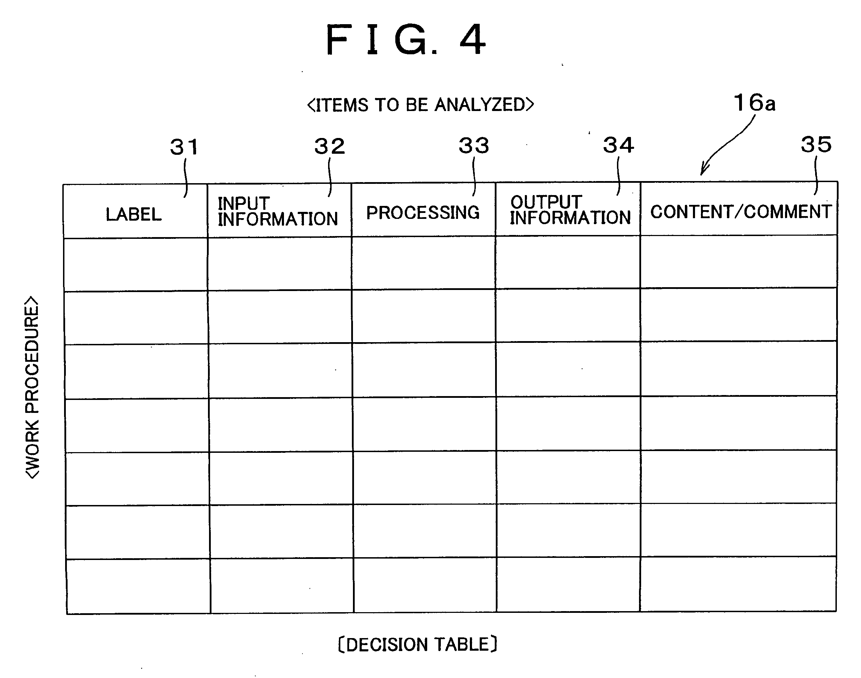

Fig. 4 is an explanatory view illustrating the construction of the knowledge data 16a. The knowledge data 16a is a data set described using a decision table. Areas 31-35 to be analyzed by the knowledge data processing engine 21 are defined at each of the lines, while procedures are defined at each of the rows.

A first area 31 is an area where a label is described (stored). The label is used as an identification or discrimination element which indicates a train of knowledge data (processing procedures) for setting the repetition of knowledge data. This label makes it easy to describe and control the knowledge data 16a.

A second area 32 is an area where input information is described. The input information is required to be executed by the knowledge data processing engine 21 and is received by means of the input unit 13 (Fig. 1) such as a keyboard.

A third area 33 is an area where processing information is described. This processing information includes those processings oriented to the worker such as information (processing name) indicative of a function program to be call out, a function (arithmetic equation) to be executed, the designation of a shape and so on.

A fourth area 34 is an area where output information is described. The output information includes a value determined in correspondence with the input information, the result of processing the input information in accordance with the description at the third area 33, the result of processing the input information independently, and information designating a branch destination.

A fifth area 35 is an area where the content and comment relating to the input information, the processing information and the output information are described. Such content and comment are written in a predetermined national language (e.g., Japanese) thereby to help the understanding of the knowledge data. Thanks to the description at the area 35, the worker is enabled to understand the content of the knowledge data easily and to carry out the revision and addition of the same.

The processing program for the knowledge data processing engine 21 is called out of either the function group 22a or the CAD program 22b. For instance, when the CAD program 22b is called utilizing the knowledge data 16a, the worker selects a discrimination element (knowledge name and table name) from those displayed on a menu of the CAD program 22b. The CAD program 22b operates to deliver information of the selected discrimination element to the knowledge data processing engine 21.

The knowledge data processing engine 21 includes the following steps which the computer 21 is made to execute. That is, the engine 21:
1. Receives the discrimination element indicative of knowledge data.
2. Searches the table for the knowledge data 16a by reference to the received discrimination element.
3. Analyzes and executes those data on the searched table on a line-by-line basis from the top line.
4. If the description of the processing information begins with "function:," then delivers information on the function to the function group 22a or CAD program 22b and receives the result of the processing thereby.
5. If a branch command is described at at least one of the input information, the processing information and the output information, then analyzes the procedure designated by the branch command.
6. At the end of the selected table or in response to an end command, hands over the control to the CAD program 22b.

At the above step 4, the function group 22a executes the information (i.e. function) if the same contains a function, but transfers the received information to the CAD program 22a if no function is contained therein. The CAD program 22b executes a processing program (inclusive of the macro program 23) corresponding to the received information and delivers the result to the knowledge data processing engine 21 through the function group 22a or directly.

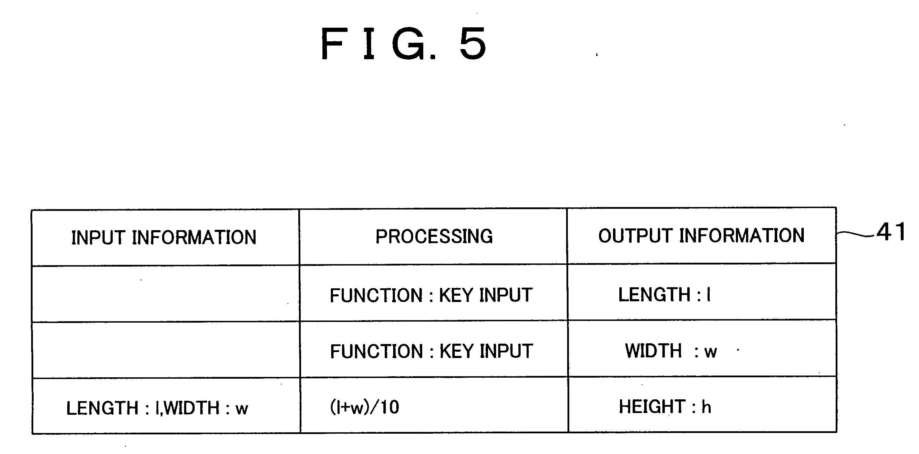

The described content of the knowledge data 16a will be described with reference to Figs. 5 -12 in detail. Fig. 5 is an explanatory view showing the description examples of the input information, the processing information and the output information. The knowledge data 41 shown in Fig. 5 is a procedure for accepting inputs of a length 1 and a width w to calculate a height h therefrom.

In the beginning, "Function: Key Input" is written at the processing information area to accept the length 1, and "Length: 1" which is made by writing the value obtained through the processing at the output information area is output . Subsequently, "Function: Key Input" is written at the processing information area to accept the width w, and "Width: w" which is made by writing the value obtained through the processing at the output information area is output. Then, the previously obtained "Length: 1" and "Width: w" are described at the input information area, and an equation "(1+w)÷10" is described at the processing information area. The value obtained through the arithmetic operation is set as "Height: h" described at the output information area.

In this manner, the knowledge data is described following the basic flow in computer processing, i.e., from "input information" to "processing information" and then to "output information". Since the description in the manner is easy for the workers (designers and technicians) to understand, they are able to revise, maintain and change the knowledge data easily. That is, the knowledge data can represent and reflect the workers' know-how easily.

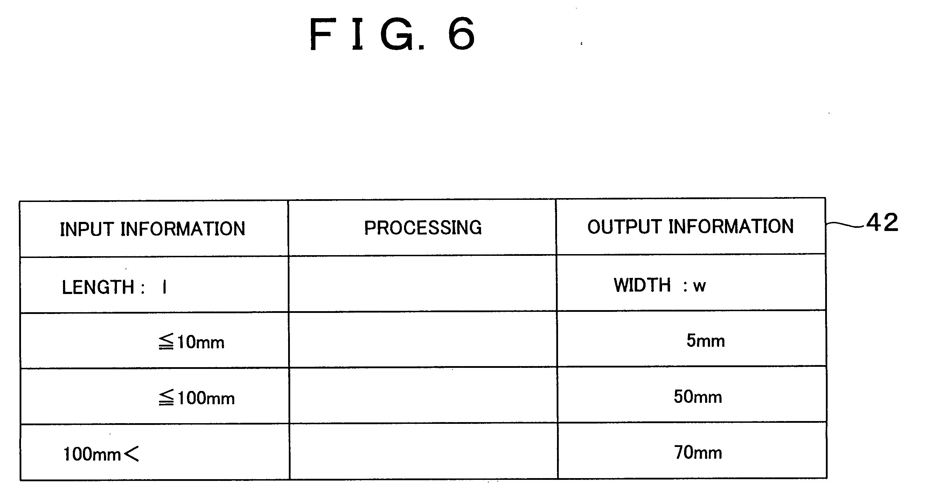

Fig. 6 is an explanatory view showing knowledge data which defines the relation in correspondence between the input information and the output information. The knowledge data 42 shown therein is described to relate the output information to the input information and is used to determine "Width: w" written at the output information area on the basis of "Length: 1" written at the input information area. At the input information area, a range of the length: 1 is described, and the Width: w written at the output information area is determined in connection with such a range of "Length: 1." For instance, if the length: 1 is less than 10 mm (millimeter), the knowledge data 42 determines the width: w to be 5 mm.

In this way, the knowledge data is described by indicating the relation between the input information and the output information. The description in this manner is effective in representing the information which the workers acquired through their experiences.

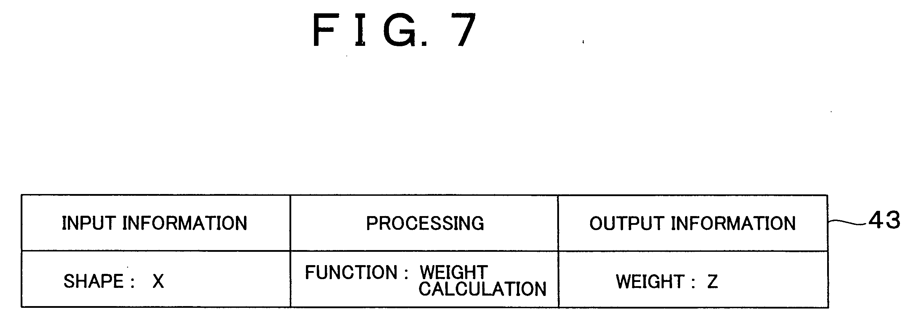

Fig. 7 is an explanatory view showing knowledge data for functions. The knowledge data 43 shown therein are of the property that functions such as "Function to Prepare Output Information," "Function to Obtain Output Information from Outside" and the like are described as the description at the processing information area. "Shape: x" is described at the input information area, "Function: Weight Calculation" is described at the processing information area, and "Weight: z" is described at the output information area. That is, this knowledge data is of the property that carries out the weight calculation of "Shape: x" to obtain "Weight: z." "Function: Weight Calculation" described at the processing information area indicates a program name (function name) which is included in the function program shown in Fig. 2 (function group 22a or CAD program 22b shown in Fig. 3).

In this manner, by describing at the processing information area a function name to be executed, the knowledge data can be simplified in description. Since it is not needed to describe (or code) such function program actually, it can be realized that knowledge data is made up easily even by beginners.

In a modified form, a function of "Macro Recognition of Shape" may be described at the processing information area. The macro recognition of a shape is the function to recognize various characteristics which an input shape has in its entirety. The various characteristics means the maximum size of the shape, the outmost profile as viewed in a direction along a predetermined axis (i.e., the shape projected on a surface normal to the predetermined axis) and so forth.

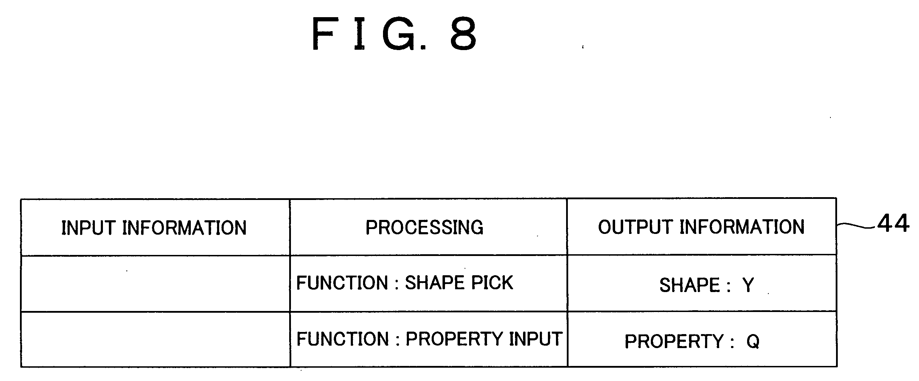

Fig. 8 is an explanatory view showing knowledge data in which functions are described at the processing information area. The knowledge data 44 exemplified therein includes data which describes functions of "Designation of Target Shape" and "Parameter Designation" at the processing information area. "Designation of Target Shape" is a processing for designating a target to be at the output information area selectively from information generated outside. "Parameter Designation" is a processing for inputting a numeral or property to make an output information.

"Function: Shape Pick" is described at the processing information area, and "Shape: Y" is described at the output information area. The knowledge data processing engine 21 shown in Fig. 2 makes the display unit 14 shown in Fig. 1 display a message prompting the worker to pick a figure, recognizes the shape of the figure picked by the worker, and outputs the shape as a discrimination element Y.

In this manner, by picking the shape which has been prepared in advance, the worker can easily designate the shape data which is used for the execution of the knowledge data.

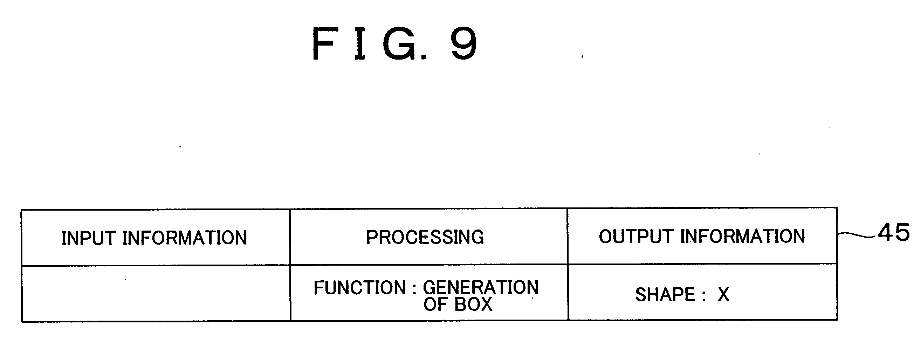

Fig. 9 is an explanatory view showing knowledge data in other use. Knowledge data 45 shown therein has "Function: BOX Draw" described at the processing information area and "Shape: X" described at the output information area. "Function: BOX Draw" is the knowledge data given a name which is assigned to others. That is, by describing a function, a macro program or knowledge data at the processing information area, it is possible to call and utilize it. Hence, with a combination of a number of simple procedures, a complicated procedure can be constituted, so that a high-level, or sophisticated processing can be executed.

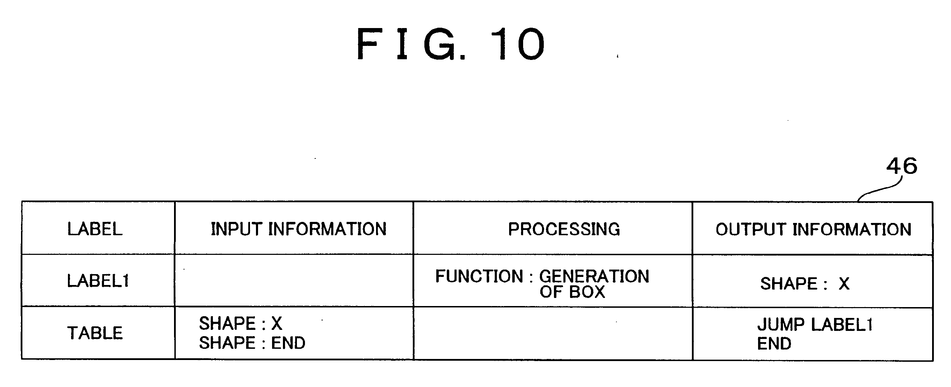

Fig. 10 is an explanatory view showing knowledge data using a label. The knowledge data 46 shown therein is data in which commands for label assignment, branch and end are described. "LABEL1" is described at a label area, "JUMP LABEL1" is described at the output information area of the next record. Accordingly, analyzing a record of knowledge data with the jump command, the knowledge data processing engine 21 unconditionally branches to another record with "LABEL1" at the label area and analyzes those data on the record. In a modified form, there may be described a conditional branch command which alters the processing flow in depending upon input information or processing result.

Further, the knowledge data 46 has "Shape: END" described at the input information area and also has "END" described at the output information area. Therefore, the knowledge data processing engine 21 shown in Fig. 2 compulsorily terminates its processing on the record.

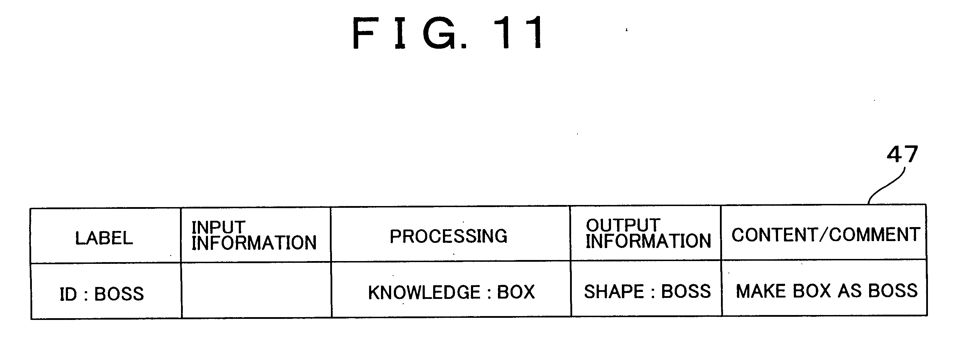

Fig. 11 is an explanatory view showing knowledge data with a content/comment. This knowledge data 47 has "Make BOX as Boss" described at the content/comment area. The information at the area eases the understanding the knowledge data.

In addition, by separating the areas for the label and the content/comment from those for the input information, processing information and output information, the information described at each area is made easier for the worker to understand, whereby the understanding of the knowledge data 16a can be expedited.

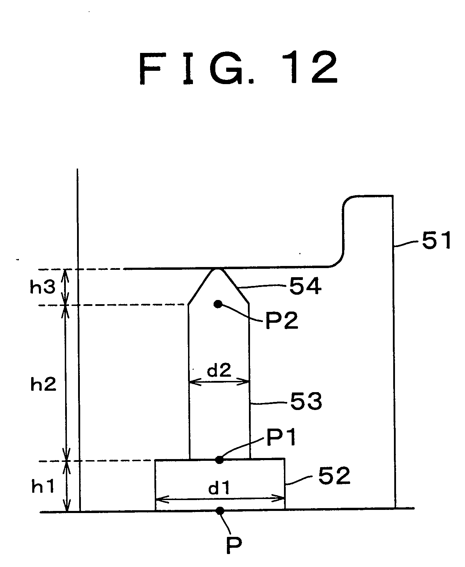

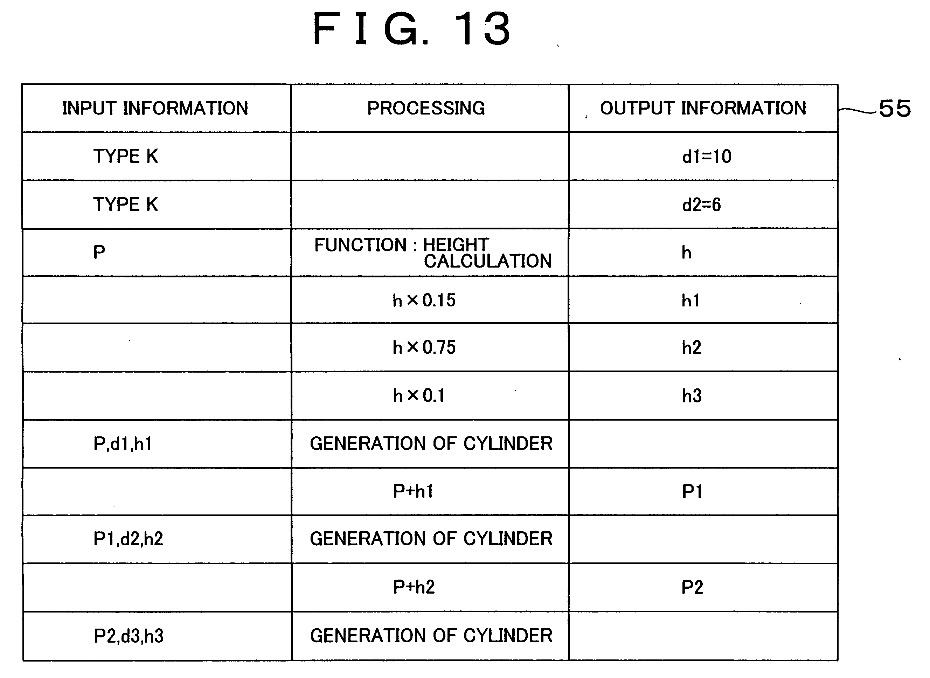

An example in way of describing the knowledge data 16a will be described with reference to Figs. 12 to 15. Fig. 12 is an explanatory view of an example of drawing the shape data, Fig. 13 is an explanatory view of the knowledge data for the shape data in Fig. 12. Now let it be assumed that an ejector pin added to a die mold is to be designed. The ejector pin is composed of several portions 52, 53 and 54 and is made with a position P as the reference.

The knowledge data processing engine 21 shown in Fig. 2 analyzes and executes the knowledge data 55 shown in Fig. 13. In this case, as "Type K" of the ejector pin to be made and the position "P" where to make are input by the worker, the engine 21 generates the shape data for the ejector pin which meets the height of the die mold 51. The position P is the reference position for the portion 52, from which information the engine 21 makes automatic decisions of positions P1 and P2 which are respectively the reference positions for other portions 53 and 54, and generates shape data for the portions 53, 54. The position information on the positions P1, P2 so decided reflect the worker' s knowledge.

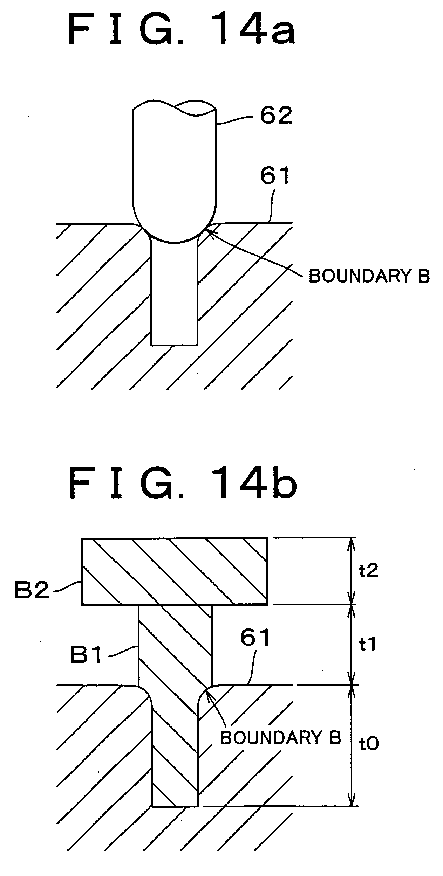

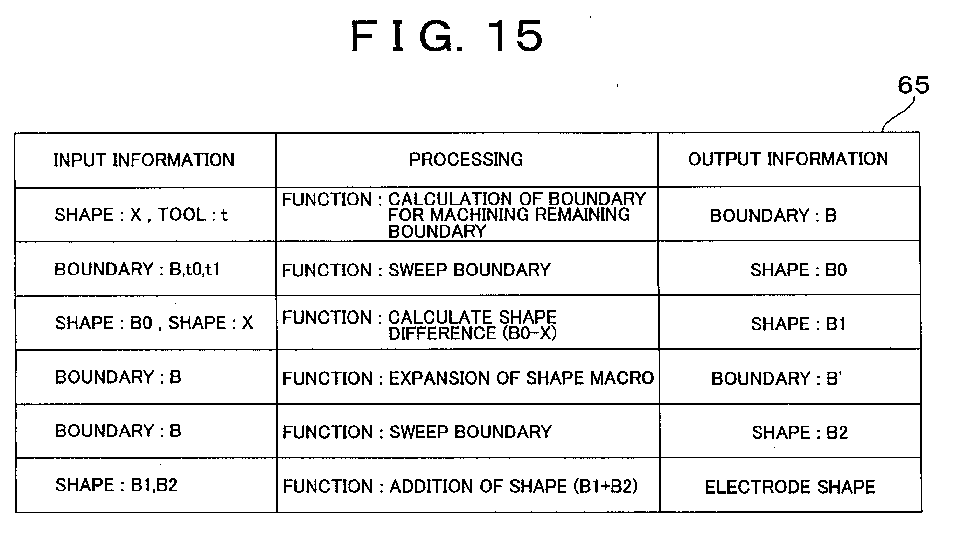

Figs. 14a and 14b are explanatory views illustrative of instances in electric discharge machining. Fig. 15 is an explanatory view of knowledge data for the instances in Figs. 4a and 14b. Now in case that as shown in Fig. 14a, a workpiece 61 with a concavity is to be machined, it is first machined with a tool 62 of the smallest diameter, and the remaining machining is done by electric discharge machining. Prior to the discharge machining, a boundary between the portion having been machined with the tool 62 and the portion not machined yet is calculated, so that electrodes B 1 and B2 which take the form corresponding to the portion not machined are designed as shown in Fig. 14b. The knowledge data 65 shown in Fig. 15 describes a procedure of recognizing the features in shape data for the workpiece 61 then to determine the shapes of the electrodes B1, B2. By describing complicated calculations for the boundary as functions at the processing information area, the entirety of the procedure is made easy to see and can be understood easily.

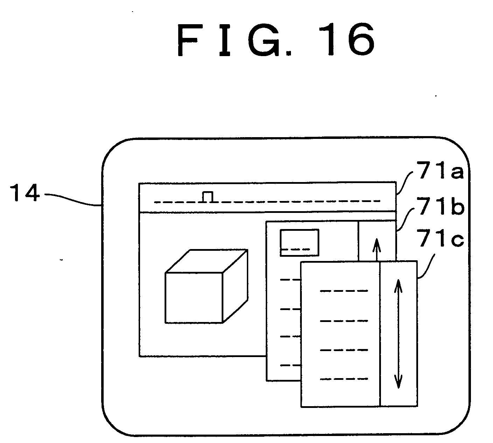

Displays in utilizing the knowledge data 16a will be described with reference to Figs. 16 to 20. It is now supposed that as shown in Fig. 16, a design image 71a according to the CAD program 22b is displayed on the display unit 14 shown in Fig.1.

When the worker clicks an icon for knowledge base on the image 71a, a display is effected of list-like menus 71b and 71c being so classified as, for example, "Often used," "Bosses," "Ribs" and so on. The worker selects the knowledge name of a target, e.g., "BOX," from the menus 71b and 71c.

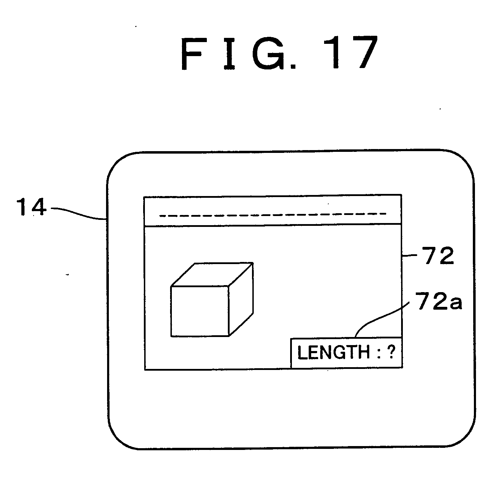

Then, as shown in Fig. 17, the display unit 14 displays a design image 72 including a message 72a (text box) which prompts inputting the value of a length necessary in the procedure described in the knowledge data of "BOX," responsive to which the worker manipulates the input unit 13 (keyboard) to input the length.

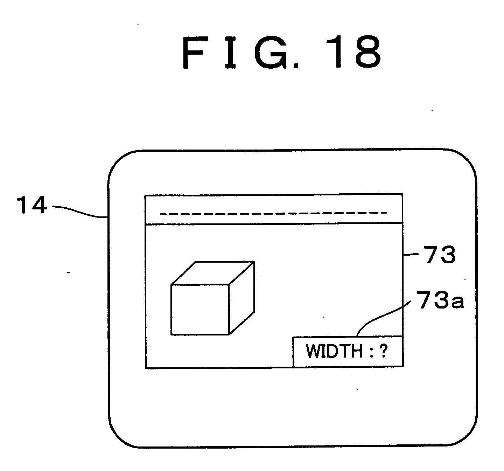

Next, as shown in Fig. 18, the display unit 14 displays another design image 73 including a message 73a (text box) which prompts inputting the value of a width necessary in the procedure described in the knowledge data of "BOX," responsive to which the worker manipulates the input unit 13 (keyboard) to input the width.

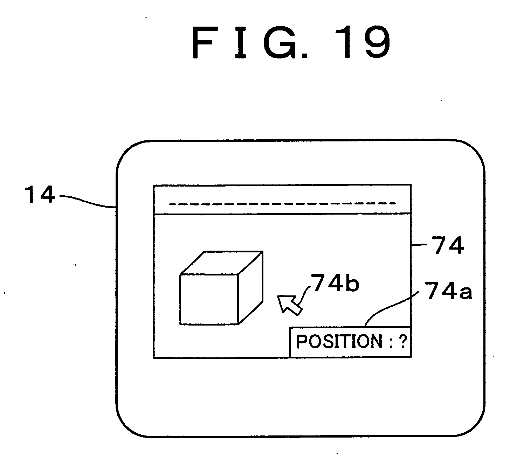

Further, as shown in Fig. 19, the display unit 14 displays another design image 74 including a message 74a which prompts designating the place where the "BOX" is to be generated, response to which the worker manipulates a mouse of the input unit 13 to move a cursor 74b to the place where the "BOX" is to be generated.

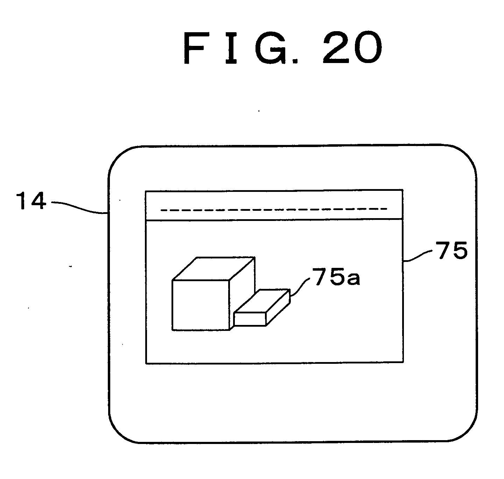

As a result, as shown in Fig. 20, a design image 75 illustrating another box 75a whose height is additionally decided by the knowledge data is displayed on the display unit 14. The additionally decided height reflects the worker' s knowledge.

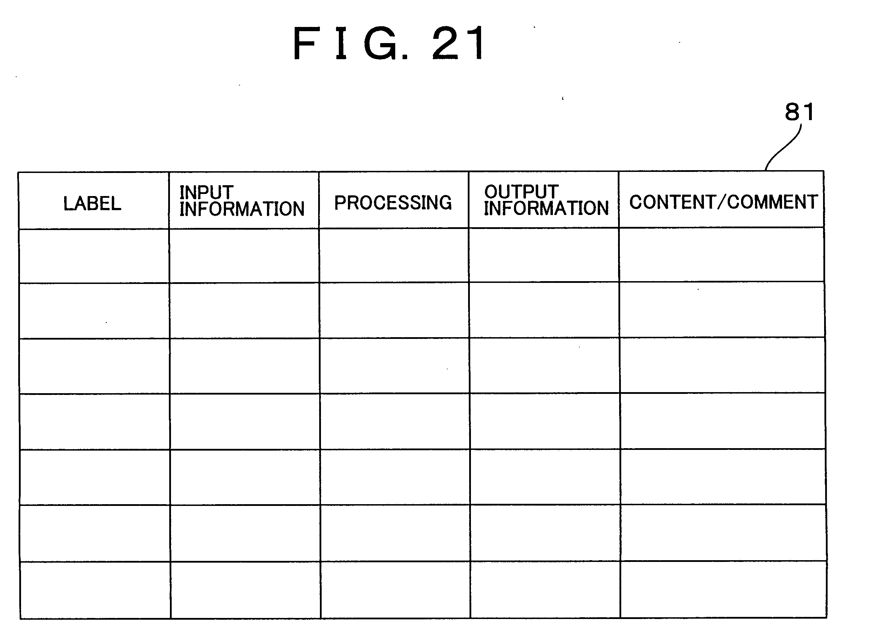

A knowledge data administration program for the preparation and addition of the knowledge data 16a will be described hereafter. As the worker inputs the name of knowledge data (the name of a table in which the knowledge data is described), the knowledge data administration program searches the knowledge data shown in Fig. 2 by reference to the table name. As a result, if the knowledge data exists, the administration program displays a revision image on the display unit 14, but if it does not exist on the contrary, generates a new table to display an input image on the display unit 14. Fig. 21 shows an input image 81 for the new table.

The input image 81 includes a plurality of cells where various pieces of information are describable. When the worker double clicks a cell intended by manipulating the mouse, an input window opens to wait for inputting. The worker describes suitable information or revise previous one. In describing information, inputting may be done by displaying a list of functions and then by selecting suitable information from the list or by cutting and pasting such suitable information.

When the worker clicks a storage button (or depresses a predetermined key), the knowledge data administration program stores the table in the second memory unit 16 shown in Fig. 1. Further, the worker clicks an end button (or depresses another predetermined key), the administration program terminates the revising and/or inputting and transfers the control to another program.

According to the preferred embodiments described hereinabove, the following advantages can be attained.
(1) The knowledge data 16a represents the knowledge of workers as "input information," "processing information" and "output information," and these pieces of information are accumulated readably by the computer in association with one another. In other words, the knowledge data 16a is described following the basic flow in computer processing such as from "input information" to "processing information" and further to "output information". Since this helps the workers (designers and technicians) understand the description of the knowledge data, they are able to prepare, maintain and alter such knowledge data easily.
(2) Function names can be described as "processing information." Thus, by utilizing functions which provide the existing functions, the knowledge data processing engine 21 can be simplified in construction and speeded up in operation, and the time period for the development can be shortened.
(3) Data "Shape Recognition by Macro," "Designation of Target Shape" and "Parameter Designation" can be described as the processing information. Consequently, required arithmetic processings and other processings for shape data recognition or the like can be utilized easily, and the knowledge data can be described easily.
(4) The design system 11 is provided with the knowledge data 16a and the program 15a which includes the knowledge data processing engine 21 and the function program 22. By separating the knowledge data processing engine 21 and the function program 22 from each other, the engine 21 and the program 22 can be made easy not only in development but also in maintenance.
(5) The function program 22 includes the function group 22a and the CAD program 22b. By utilizing the existing CAD programs 22b, the function group 22a can be reduced in number to be made newly, so that the accumulation and utilization of the knowledge data can be expedited.
(6) A label, a branch command and an end command can be described in the knowledge data 16a. This advantageously results in making a complicated procedure with a combination of simple procedures, whereby a high level or sophisticated processing can be executed.

The foregoing embodiment may be modified as follow:
- The foregoing design system is applicable not only to a manufacturing process for die mold or the like utilizing knowledge data, but also to processes in other fields such as, for example, model designing, trouble shooting, measuring system, measuring aiding system, conventional database system, business processing for accounting and the like.
- The program 15a, the knowledge data 16a and the shape data 17a shown in Fig. 1 may be placed for distributed storages in independent memory units connected to a data network. Further, the programs and data may be placed for distributed storages in one or more servers connected to a network.
- Control commands like the halt and termination of processing may be described as the "processing information" (i.e., in such a manner that they can be analyzed by the knowledge data processing engine 21).
- The representation of error messages may be described as output information.
- The preparation and administration of the knowledge data 16a may be made using conventional calculation-table software, text processing software and the like. By doing so, the preparation and revision of the knowledge data 16a can be made easily.
- The items in the table for the knowledge data 16a may be changed. For example, the items may be decreased in number by writing the label and the knowledge name at the input information area. An item where control information is described may be provided independently.

While the invention has been described with reference to preferred embodiments thereof, it is to be understood that the invention is not limited to the preferred embodiments or constructions. To the contrary, the invention is intended to cover various modifications and equivalent arrangements. In addition, while the various elements of the preferred embodiments are shown in various combinations and configurations, which are exemplary, other combinations and configurations, including more, less or only a single element, are also within the spirit and scope of the invention.

## Claims

1. A method of representing knowledge data (16a) in a computer (12) which is used for accumulating worker knowledge, **characterized in that** the worker knowledge is represented as at least one of input information given to the computer (12) and processing information executed by the computer (12) and as output information obtained by the process, and that the respective pieces of the information are accumulated readably by the computer (12) with the respective pieces of the information being associated with one another.

2. A knowledge data representing method as set forth in claim 1, **characterized in that** the knowledge data (16a) is represented using a decision table (Fig. 4) from a procedure performed by the worker and the respective pieces of information.

3. A knowledge data representing method as set forth in claim 1 or 2, **characterized in that** the knowledge data (16a) is stored associated with information that indicates the content of the knowledge data.

4. A knowledge data representing method as set forth in any one of claims 1 through 3, **characterized in that** the output information is determined in correspondence with a case specified by the input information.

5. A knowledge data representing method as set forth in any one of claims 1 through 4, **characterized in that** one of an equation, a function indicative of a predetermined function, a name indicative of knowledge data and a macro name is described in the processing information.

6. A knowledge data representing method as set forth in any one of claims 1 through 5, **characterized in that** information for controlling the flow of processings is described in at least one of the input information, the processing information and the output information.

7. An information processing system **characterized by** comprising:
a memory storing knowledge data (16a) that represents the knowledge of a worker as at least one of input information given to a computer (12) and processing information executed by the computer (12), and as output information obtained by the process, the knowledge data being readably accumulated by the computer (12) with respective pieces of the information being associated with one another; and
a processing engine (21) that causes the computer (12) to analyze and execute the knowledge data (16a).

8. An information processing system as set forth in claim 7, **characterized in that** a function name indicative of a predetermined function is described in the processing information of the knowledge data (16a) and that the processing engine (21) analyzes a description of the processing information, and if the description includes the function name, then calls a processing function providing the predetermined function from an outside source.

9. An information processing system as set forth in claim 8, **characterized in that** the processing function include a function for making the computer (12) process the shape data (17a) and another function for making the computer (12) execute a predetermined operation processing.

10. An information processing system as set forth in claim 7, **characterized by** further comprising a function program (22) called from the processing engine (21) and including a processing executed by the computer (12) to deliver a result to the processing engine (21).

11. An information processing system as set forth in claim 10, **characterized in that** the function program (22) comprises:
a computer-aided-design program (22b) that includes functions relating to shape data for aiding a generation and revision of the shape data; and
a function group (22a) that includes functions other than functions included in the computer-aided-design program (22b) program (22b) among the functions described in the knowledge data (16a).

12. An information processing system as set forth in any one of claims 7 through 11, **characterized in that** the knowledge data (16b) includes a written branch command and the processing engine (21) analyzes the branch command and then analyzes a procedure with a label which is written together with the branch command.

13. An information processing system as set forth in any one of claims 7 through 12, **characterized in that** the processing engine (21) includes a program for causing the computer (12) to execute the steps of:
receiving a discrimination element indicative of the knowledge data (16a);
searching a table (Fig. 4) for the knowledge data by reference to the received discrimination element;
analyzing and executing data on the searched table (Fig. 4) on a line-by-line basis one after another, and
handing over information of the function to the function program (22) if the description of processing information begins with "function:" and of receiving a processing result.

14. A program for causing a computer (12) to execute knowledge data (16a) that represents knowledge of a worker as at least one of input information given to the computer (12) and processing information executed by the computer (12), and as output information obtained by the process and respective pieces of the information are readably accumulated by the computer (12) with the respective pieces of information being associated with one another, **characterized by** comprising instructions to:
receive a discrimination element indicative of the knowledge data;
search a table (Fig. 4) for the knowledge data by reference to the discrimination element received;
analyze and execute data on the searched table (Fig. 4) on a line-by-line basis one after another, and
hand over information of the function to the function program (22) if the description of processing information begins with "function:" and receive a processing result.
